# FASCICULE DE BREVET EUROPEEN

(11) **EP 3 889 048 B1**
(45) Date de publication et mention de la délivrance du brevet: **07.02.2024**
(21) Numéro de dépôt: 21174596.3
(22) Date de dépôt: 23.03.2020
(51) Int. Cl.: B64D 35/08, B64D 27/02, B64D 27/24

(54) **PROCEDE D'OPTIMISATION DU BRUIT GENERE EN VOL PAR UN GIRAVION**
VERFAHREN ZUR OPTIMIERUNG DES LÄRMS, DER VON EINEM DREHFLÜGELFLUGZEUG IM FLUG ERZEUGT WIRD
METHOD FOR OPTIMISING THE NOISE GENERATED IN FLIGHT BY A ROTORCRAFT

(30) Priorité: 29.03.2019 FR 1903327
(43) Date de publication de la demande: 06.10.2021
(62) Demande divisionnaire de: 20165034.8
(73) Titulaire: Airbus Helicopters, 13725 Marignane Cedex (FR)
(72) Inventeur: GOMEZ, Nayibe, 13090 AIX EN PROVENCE (FR)
(74) Mandataire: GPI Brevets

(56) Documents cités:
- WO-A1-2018/175349
- US-A1- 2014 010 652
- US-A1- 2016 362 100
- US-A1- 2018 009 542
- US-B2- 8 852 052

## Description

La présente invention est du domaine des installations motrices des giravions et en particulier du domaine restreint des installations motrices hybrides.

La présente invention concerne un procédé d'optimisation du bruit généré en vol par un giravion.

Un giravion, désigné également « aéronef à voilure tournante », comporte traditionnellement un fuselage et au moins un rotor principal entraîné en rotation par une installation motrice et assurant au moins partiellement la sustentation et/ou la propulsion du giravion. Le giravion peut aussi comporter un dispositif anticouple. Un dispositif anticouple est parfois constitué par un rotor auxiliaire situé généralement à l'arrière du giravion, à l'extrémité d'une poutre de queue du giravion et entraîné en rotation par son installation motrice.

Un giravion, peut aussi comporter plusieurs rotors principaux assurant simultanément et au moins partiellement la sustentation et/ou la propulsion du giravion.

Un giravion peut également comporter une ou plusieurs hélices d'avancement, placées par exemple de part et d'autre du fuselage, et éventuellement sur une aile du giravion. Les hélices sont généralement entraînées en rotation par l'installation motrice du giravion.

L'installation motrice du giravion peut comporter un ou plusieurs moteurs thermiques, par exemple des turbines à gaz ou bien des moteurs à pistons, ainsi qu'une ou plusieurs boîtes de transmission mécanique de puissance.

Lors de son fonctionnement en vol, à savoir lorsque le giravion évolue au-dessus du sol, un giravion comporte ainsi plusieurs sources potentiellement bruyantes, à savoir chaque moteur thermique, chaque boîte de transmission mécanique de puissance, chaque rotor principal et, le cas échéant, chaque rotor auxiliaire et chaque hélice.

Les bruits générés par un moteur thermique ont pour origine d'une part, les explosions successives du carburant et, d'autre part, les éléments mécaniques du moteur thermique, tels que notamment les aubes tournantes dans le cas d'une turbine à gaz. Ces bruits générés par un moteur thermique sont variables notamment en fonction des paramètres de fonctionnement du moteur thermique, tels que sa vitesse de rotation, sa température ou encore le couple qu'il fournit par exemple. Eventuellement, ces bruits peuvent aussi varier en fonction des conditions d'utilisation du moteur thermique, en particulier la température et la pression atmosphérique extérieures au moteur thermique.

Les bruits générés par une boîte de transmission mécanique de puissance ont pour origine principale des éléments tournants, tels que des arbres et des roulements de la boîte de transmission mécanique de puissance, ainsi que des éléments de réduction ou d'augmentation de vitesses de rotation, tels que des pignons et/ou des engrenages de cette boîte de transmission mécanique de puissance. Ces bruits générés par une boîte de transmission mécanique de puissance sont variables principalement en fonction des vitesses de rotation de ses éléments tournants et de ses éléments de réduction ou d'augmentation de vitesses de rotation.

Les bruits générés par chaque rotor principal, par chaque rotor auxiliaire et/ou par chaque hélice ont pour origine les comportements aérodynamiques de leurs pales. Ces bruits générés par chaque rotor et/ou par chaque hélice sont variables en fonction de leurs conditions d'utilisation et donc de la phase de vol du giravion.

Les bruits générés par un giravion peuvent poser des problèmes d'acceptation du giravion, notamment vis-à-vis du voisinage des zones d'atterrissage, telles que les aérodromes ou aéroports, ainsi que dans les milieux urbain ou périurbain dans lesquels le giravion peut évoluer à basses altitudes. Les passagers du giravion ainsi que le personnel opérant au sol sur le giravion et autour du giravion subissent également ces nuisances sonores et exigent également de plus en plus de diminuer le bruit auquel ils sont soumis dans l'environnement du giravion.

Ces différentes sources de bruit se combinent lors d'un vol du giravion, mais leurs contributions au spectre global de bruit du giravion perçu au sol varient considérablement en fonction non seulement des conditions de vol et de la phase de vol du giravion, mais également de la position de l'observateur. Cependant, une ou plusieurs sources de bruit se distinguent et sont dominantes pour certaines phases de vol du giravion.

Ainsi, lors d'un vol stationnaire ou lors d'un décollage, qui est une phase de vol de transition entre le sol et le vol proprement dit, le rotor auxiliaire peut être une source de bruit dominante en raison d'une forte poussée qu'il doit fournir. La contribution du bruit du moteur thermique peut également s'avérer importante, voire constituer la source de bruit dominante, en particulier lorsque le rotor auxiliaire est caréné puisque le bruit du rotor auxiliaire est partiellement masqué par le carénage pour un observateur sous la trajectoire de vol.

En vol de croisière en palier, la situation est différente, le rotor principal et le rotor auxiliaire non caréné constituant généralement les sources de bruit prédominantes.

Dans le cas d'un vol d'approche, le rotor principal est à l'origine des bruits les plus significatifs générés par le giravion.

Des solutions visant à réduire les bruits générés par un giravion existent. Par exemple, une optimisation du ou des moteur(s) thermique(s) de l'installation motrice permet d'obtenir une réduction des bruits générés par cette installation motrice. De même, une optimisation des trajectoires et/ou des vitesses du giravion permet de réduire les bruits générés par le giravion. Une réduction des bruits peut également être obtenue par une optimisation des rotors et de leurs pales ou encore de la ou des boîte(s) de transmission mécanique de puissance de l'installation motrice.

La publication « Helicopter Noise Réduction Technology » en avril 2015 de l'ICAO, acronyme désignant en langue anglaise « International Civil Aviation Organization », dresse un état des lieux de solutions existantes dans ce domaine.

La publication NASA/CR-2002-211650, "Revolutionary Concepts for Helicopter Noise Réduction - S.I.L.E.N.T. Program", de Bryan Edwards and Charles Cox en mai 2002 identifie en particulier des solutions applicables aux rotors principaux et auxiliaires.

Toutefois, ces solutions permettent une réduction plus ou moins efficace des bruits générés par un giravion.

L'art antérieur comporte également le document EP 2571764 décrivant un giravion muni d'une installation motrice hybride comportant un moteur thermique, un moteur électrique et un générateur électrique. Le moteur thermique entraîne en rotation le générateur électrique afin de générer une énergie électrique utilisée pour alimenter électriquement le moteur électrique. Ce moteur électrique est relié au rotor principal du giravion afin de l'entraîner en rotation. L'installation motrice hybride peut aussi comporter un ou plusieurs dispositifs de stockage d'énergie électrique afin, d'une part, de stocker au moins une partie de l'énergie électrique générée par le générateur électrique et, d'autre part, d'alimenter le moteur électrique indépendamment du fonctionnement du moteur thermique.

De plus, le document US 8852052 décrit une installation motrice hybride pour véhicule routier. L'installation motrice hybride comporte un moteur thermique et deux moteurs électriques. Une répartition de puissance entre les moteurs peut être effectuée afin notamment de réaliser une économie d'ensemble d'utilisation du véhicule routier. D'autres paramètres sont éventuellement intégrés afin par exemple d'assurer une réserve d'énergie disponible et/ou de préserver la longévité du véhicule. La répartition de puissance peut aussi être réalisée en fonction du bruit généré par le véhicule afin de limiter ce bruit vis à vis d'une valeur limite audible maximale.

Le document US 2016/0362100 décrit un système de contrôle d'une installation motrice pour véhicule routier. L'installation motrice comprend un moteur thermique et deux moteurs électriques. La puissance et la vitesse opérationnelle du moteur thermique est ajustée à certaines phases de fonctionnement afin que ne soit pas dépassé une valeur limite audible ou un taux de vibrations perceptibles maximales.

Le document US 2018/0009542 décrit une installation motrice hybride pour un hélicoptère comportant un moteur thermique et un moteur électrique. Le moteur thermique et le moteur électrique sont couplés au rotor principal de l'hélicoptère et configurés pour faire entraîner séparément ou collectivement le rotor principal.

Enfin, le document US 2014/0010652 décrit un ensemble propulseur pour aéronef comportant un arbre de transmission auquel sont reliés un moteur thermique et un moteur électrique.

La présente invention a alors pour objet de modérer et d'optimiser le bruit généré en vol par un giravion.

La présente invention vise ainsi un procédé d'optimisation du bruit généré par une installation motrice hybride d'un giravion pendant une phase de vol, l'installation motrice hybride étant munie d'au moins un moteur thermique et d'au moins une machine électrique. Ce procédé d'optimisation du bruit généré par une installation motrice hybride d'un giravion pendant une phase de vol comporte les étapes comme définies dans la revendication 1.

La présente invention permet de modérer et d'optimiser le bruit généré en vol par un giravion afin par exemple, d'une part, d'améliorer le confort des passagers du giravion et, d'autre part, de limiter la génération de bruit pouvant être gênant pour l'environnement survolé par le giravion, notamment en milieu urbain ou périurbain. Dans ce but, le giravion utilise une installation motrice hybride comportant une source d'énergie mécanique complémentaire aux moteurs thermiques, en particulier au moins une machine électrique associée à une source d'énergie électrique, afin d'entraîner en rotation chaque rotor du giravion, et en particulier un rotor principal, pendant cette phase de vol du giravion.

Le procédé selon l'invention permet ainsi, dans certaines phases de vol et certaines conditions de vol, de modérer le bruit généré par un giravion par réduction du régime de chaque moteur thermique à iso-puissance disponible de l'installation motrice hybride, en apportant le complément de puissance nécessaire par une source d'énergie complémentaire moins bruyante.

Ce procédé peut être exécuté après un ordre d'un pilote du giravion demandant une modération du bruit du giravion en vol par exemple par l'intermédiaire d'un interrupteur ou d'un bouton présent sur le tableau de bord du giravion ou bien automatiquement. Par exemple un calculateur détermine la phase de vol courante de manière usuelle et commande l'installation motrice en conséquence.

Le giravion comporte notamment :
- une installation motrice hybride,
- au moins un rotor entraîné en rotation par l'installation motrice hybride, en particulier au moins un rotor principal,
- un système de gestion de l'installation motrice hybride muni d'un calculateur, d'au moins un boîtier de contrôle dudit au moins un moteur thermique et d'un dispositif de commande de chaque machine électrique assurant le contrôle et la gestion du fonctionnement de ladite au moins une machine électrique, et
- au moins une source d'énergie électrique alimentant électriquement au moins une machine électrique par l'intermédiaire d'un réseau électrique du giravion.

Un moteur thermique peut être un moteur à piston ou bien, plus généralement sur les giravions, un turbomoteur comportant un générateur de gaz et une turbine libre.

Dans le cadre de l'invention, au moins une machine électrique de l'installation motrice hybride du giravion est un moteur électrique remplissant uniquement une fonction motrice ou bien une machine électrique réversible, susceptible de fonctionner en mode moteur ou bien en mode générateur. De la sorte, cette au moins une machine électrique forme avec au moins une source d'énergie électrique une source d'énergie mécanique complémentaire susceptible d'entraîner en rotation chaque rotor du giravion, notamment par l'intermédiaire d'une boîte de transmission mécanique de puissance de l'installation motrice hybride. Ainsi, au moins une machine électrique permet avantageusement de participer à l'entraînement de chaque rotor du giravion et de limiter de la sorte la contribution de chaque moteur thermique à l'entraînement de chaque rotor et, par suite, de limiter la génération par chaque moteur thermique de bruit susceptible d'être gênant pour l'environnement du giravion.

Chaque machine électrique de l'installation motrice hybride du giravion est caractérisée par une puissance maximale correspondant à ses capacités maximales, indépendamment de la quantité d'énergie disponible dans chaque source d'énergie électrique du giravion, et sans générer de dégradation de cette machine électrique. Cette puissance maximale peut être comprise typiquement entre 15 et 25% de la puissance maximale fournie par chaque moteur thermique de l'installation motrice hybride afin de limiter notamment la masse de la machine électrique.

En mode générateur, une machine électrique permet de transformer une énergie mécanique fournie par le rotor principal ou bien par au moins un moteur thermique en une énergie électrique, éventuellement pour ralentir les rotors et/ou le moteur thermique.

Une machine électrique peut être placée en différentes positions au sein de l'installation motrice hybride du giravion. Le document FR 3039614 décrit notamment des implantations d'une machine électrique liée à une boîte de transmission mécanique de puissance, à un moteur thermique ou bien directement au rotor principal du giravion.

Par exemple, lorsque le moteur thermique est un turbomoteur, une machine électrique peut être implantée entre la turbine libre et une boîte de transmission mécanique de puissance de l'installation motrice hybride. Cette machine électrique fournit ainsi une puissance mécanique à la boîte de transmission mécanique de puissance.

Selon un autre exemple, une machine électrique de puissance peut être implantée sur une entrée spécifique et dédiée d'une boîte de transmission mécanique de puissance et fournit ainsi une puissance mécanique directement à la boîte de transmission mécanique de puissance.

Une machine électrique peut aussi être implantée sur le moyeu du rotor principal du giravion afin de fournir une puissance mécanique directement au moyeu du rotor principal.

En outre, chaque machine électrique de l'installation motrice hybride du giravion peut être alimentée par une ou plusieurs sources d'énergie électrique embarquées dans le giravion. Une source d'énergie électrique est par exemple un dispositif de stockage d'une énergie électrique, tel qu'une batterie électrique ou bien une pile à combustible. Une source d'énergie électrique peut également être un générateur électrique entraîné en rotation par un moteur thermique dédié ou bien un moteur thermique de l'installation motrice hybride du giravion.

Par ailleurs, l'installation motrice hybride peut comporter un premier dispositif d'accouplement agencé entre au moins un moteur thermique et une boîte de transmission mécanique de puissance. L'installation motrice hybride peut également comporter un second dispositif d'accouplement agencé entre au moins une machine électrique et une chaîne de transmission mécanique entraînant en rotation chaque rotor du giravion, en particulier entre au moins une machine électrique et le moyeu du rotor principal du giravion.

Le premier dispositif d'accouplement permet ainsi d'éviter d'entraîner en rotation le moteur thermique concerné dans le cas où chaque rotor du giravion serait entraîné en rotation uniquement par au moins une machine électrique. De la même façon, le second dispositif d'accouplement permet d'éviter d'entraîner en rotation la machine électrique concernée lorsque chaque rotor du giravion est entraîné en rotation uniquement par au moins un moteur thermique. Le premier dispositif d'accouplement et le second dispositif d'accouplement comporte par exemple un embrayage ou bien une roue libre.

Par ailleurs, le système de gestion de l'installation motrice hybride comporte notamment un calculateur permettant l'exécution des étapes du procédé d'optimisation du bruit généré par une installation motrice hybride d'un giravion pendant une phase de vol selon l'invention. Le calculateur peut par exemple comporter un processeur, un circuit intégré, un système programmable, un circuit logique ou bien tout dispositif équivalent, ces exemples ne limitant pas la portée donnée à l'expression « calculateur ». Le calculateur peut également comporter une mémoire stockant notamment des instructions relatives aux étapes du procédé.

Le système de gestion de l'installation motrice hybride comporte également au moins un boîtier de contrôle pour chaque moteur thermique et un dispositif de commande de chaque machine électrique.

Un boîtier de contrôle d'un moteur thermique, et d'un turbomoteur en particulier, est par exemple un boîtier de contrôle *EECU* pour la désignation en langue anglaise « Electronic Engine Control Unit » ou bien un calculateur moteur *FADEC* pour la désignation en langue anglaise « Full Authority Digital Engine Control ». Ce boîtier de contrôle permet d'une part de recueillir des informations sur des paramètres de fonctionnement du moteur thermique, telles que sa température de fonctionnement, sa vitesse de rotation ou encore son couple, et d'autre part de commander son fonctionnement, notamment son régime, à savoir sa vitesse de rotation, et la puissance qu'il fournit.

Un dispositif de commande d'une machine électrique assure le contrôle et la gestion du fonctionnement de la machine électrique, aussi bien en mode moteur qu'en mode générateur.

Un dispositif de commande permet notamment de piloter l'alimentation électrique d'une machine électrique et la coupure de cette alimentation électrique ainsi que de commander et modifier le régime de cette machine électrique et la puissance qu'elle fournit afin de réguler son fonctionnement. Un tel dispositif de commande comporte un calculateur et est par exemple un contrôleur de vitesse électronique désigné par l'acronyme ESC pour la désignation en langue anglaise « Electronic Speed Controller ». Le contrôleur de vitesse électronique ESC peut comporter un circuit électronique interne désigné par l'acronyme BEC pour la désignation en langue anglaise « Battery Eliminator Circuit » permettant de réguler la tension électrique alimentant chaque machine électrique.

Le niveau de bruit objectif correspond à une valeur prédéterminée de bruit que chaque moteur thermique pourrait atteindre lorsque le procédé selon l'invention est activé lors d'une phase de vol prédéterminé et en fonction des conditions de masse du giravion, d'altitude et de température extérieure particulières.

Le niveau de bruit objectif peut aussi être défini pour l'installation motrice dans sa totalité lorsque celle-ci comporte au moins deux moteurs thermiques, les bruits générés par chacun de ces moteurs thermiques se combinant alors.

Par exemple, le niveau de bruit objectif peut être égale à une valeur 2 Décibels (2dB) inferieure au niveau de bruit généré par chaque moteur thermique lors d'un décollage ou en phase de vol stationnaire à la Puissance Maximum de Décollage pour une température de l'air extérieur et une altitude données.

Le niveau de bruit objectif peut également être défini en fonction de l'environnement survolé par le giravion et/ou d'une hauteur de vol du giravion par rapport au sol survolé. En effet, ce niveau de bruit objectif vise notamment à limiter les perturbations sonores générées par le giravion vis-à-vis des personnes au sol dans l'environnement survolé, en particulier lorsque le giravion vole à basse altitude, dans une zone urbaine ou périurbaine.

La puissance requise à fournir par l'installation motrice hybride pour la réalisation de la phase de vol du giravion peut être déterminée de façon usuelle, en fonction de la phase de vol du giravion et des conditions de vol, à savoir la température et la pression atmosphérique extérieures au giravion, ainsi que de la masse du giravion, de la vitesse de rotation des rotors et du rendement du giravion et de l'installation motrice par exemple.

La puissance requise est par exemple déterminée à partir d'un modèle de performances comportant un jeu de courbes de variation de la puissance requise. Chaque courbe peut être définie pour une valeur de masse du giravion et pour un couple de valeurs de la température et de la pression atmosphérique extérieures au giravion. Chaque courbe peut aussi être définie pour une valeur de la masse du giravion et proposer une variation d'une puissance requise corrigée en fonction des variations de la température et la pression atmosphérique extérieures. Chaque courbe peut également être fonction de la vitesse de rotation d'un rotor, principalement le rotor principal, si la vitesse de rotation de ce rotor et variable pour la phase de vol envisagé.

Cette puissance requise peut être déterminée lors du dimensionnement du giravion. Le moteur thermique fournira la puissance requise en fonction de la vitesse de rotation de consigne du rotor principal, sans avoir dans ce cas besoin de calculer la puissance requise à chaque fois, mais seulement en fournissant plus ou moins de puissance en fonction de l'écart entre la vitesse de rotation du rotor principal et la vitesse de rotation de consigne.

La phase de vol courante du giravion peut également être déterminée pendant la détermination de la puissance requise. Cette phase de vol peut aussi être déterminée lors d'une étape spécifique, parallèlement à la détermination de la puissance requise. La phase de vol peut par exemple être déterminée en fonction de la hauteur de vol du giravion et/ou de sa vitesse d'avancement.

Ensuite, cette puissance requise est répartie entre chaque moteur thermique et au moins une machine électrique. De la sorte, le régime de chaque moteur thermique est généralement réduit, la diminution de la puissance fournie par chaque moteur thermique étant compensée par une première puissance complémentaire fournie par au moins une machine électrique, permettant ainsi avantageusement de limiter le bruit généré par chaque moteur thermique et, par suite, par l'installation motrice hybride, pendant la phase de vol.

Dans ce but, la répartition de la puissance requise comporte les sous-étapes suivantes :
- première détermination d'une puissance principale à fournir par chaque moteur thermique de sorte que chaque moteur thermique génère un niveau sonore inférieur ou égal au niveau de bruit objectif, la puissance principale étant déterminée en fonction du niveau de bruit objectif et du modèle du bruit généré par chaque moteur thermique,
- seconde détermination d'une première puissance complémentaire à fournir par au moins une machine électrique de sorte que l'installation motrice hybride fournisse la puissance requise.

De plus, lorsque la première puissance complémentaire est inférieure ou égale à une puissance disponible de cette au moins une machine électrique, la répartition de la puissance requise comporte également les sous-étapes suivantes :
- première commande d'au moins une machine électrique pour fournir la première puissance complémentaire, et
- seconde commande de chaque moteur thermique pour fournir la puissance principale.

Chaque moteur thermique fournit ainsi avantageusement une puissance principale correspondant à un niveau sonore émis par chaque moteur thermique inférieur ou égal au niveau de bruit objectif. Cette puissance principale est donc définie en fonction de ce niveau de bruit objectif et du modèle du bruit de chaque moteur thermique. Au moins une machine électrique fournit alors la première puissance complémentaire nécessaire et suffisante pour que l'installation motrice hybride fournisse la puissance requise égale à la somme de la puissance principale fournie par chaque moteur thermique et de la première puissance complémentaire fournie par chaque machine électrique.

Par contre, lorsque la première puissance complémentaire est supérieure à la puissance disponible, la répartition de la puissance requise comporte également les sous-étapes suivantes :
- troisième commande d'au moins une machine électrique pour fournir une première puissance complémentaire égale à la puissance disponible, et
- quatrième commande de chaque moteur thermique pour fournir une puissance principale égale à une seconde puissance complémentaire de sorte que l'installation motrice hybride fournisse la puissance requise.

Dans ce cas, la puissance requise fournie par l'installation motrice hybride est alors égale à la somme de la seconde puissance complémentaire fournie par chaque moteur thermique et de la première puissance complémentaire fournie par chaque machine électrique.

La puissance disponible d'une machine électrique est par exemple égale à la puissance maximale que peut fournir cette machine électrique sans générer de dégradation sur cette machine électrique. Cette puissance maximale est indépendante de la quantité d'énergie électrique disponible dans chaque source d'énergie électrique alimentant cette machine électrique.

La puissance disponible d'une machine électrique peut aussi être calculée en fonction d'une quantité d'énergie électrique disponible dans chaque source d'énergie électrique alimentant cette machine électrique et d'une durée d'utilisation de cette quantité d'énergie électrique jusqu'à épuisement. De la sorte, la machine électrique est capable de fournir la puissance disponible pendant la durée prédéterminée.

Le modèle du bruit généré par chaque moteur thermique peut être établi lors d'une étape préliminaire réalisée par exemple pendant des essais au banc de chaque moteur thermique ou bien pendant des essais en vol du giravion préalablement à sa mise en service. Cependant, cette réalisation d'un modèle peut aussi être effectuée de nouveau au cours de la vie du moteur thermique ou du giravion, en fonction des évolutions et/ou du vieillissement de chaque moteur thermique de l'installation motrice hybride du giravion.

Ce modèle du bruit généré est déterminé en fonction d'un ou plusieurs paramètres de fonctionnement du moteur thermique. Ce modèle du bruit généré par un moteur thermique prend par exemple la forme d'une courbe ou bien d'un jeu de courbes de variation du niveau sonore du bruit du moteur thermique exprimé en Décibels (DB) en fonction d'un ou plusieurs paramètres de fonctionnement du moteur thermique. Ce modèle du bruit généré peut alors être exprimé sous la forme d'une ou de plusieurs équations ou bien de couples de coordonnées permettant de tracer cette courbe ou ce jeu de courbes.

Un paramètre de fonctionnement du moteur thermique est par exemple la vitesse de rotation du moteur thermique, une température de fonctionnement du moteur thermique ou bien un couple fourni par le moteur thermique. Un paramètre de fonctionnement du moteur thermique peut aussi être la puissance fournie par ce moteur thermique.

Lorsque le moteur thermique est un turbomoteur comportant un générateur de gaz et une turbine libre, le paramètre de fonctionnement du moteur thermique est par exemple la vitesse de rotation du générateur de gaz, la température des gaz en sortie de la chambre de combustion du générateur de gaz ou bien le couple fourni par la turbine libre ou éventuellement par le générateur de gaz.

En outre, le fonctionnement d'un moteur thermique est influencé par la température et la pression atmosphérique extérieures à ce moteur thermique. Dès lors le modèle du bruit généré peut comporter un jeu de courbes, chaque courbe étant définie pour un couple de valeurs de la température et de la pression atmosphérique extérieures au moteur thermique.

Le paramètre de fonctionnement d'un moteur thermique peut également prendre en compte les variations de la température et la pression atmosphérique extérieures à ce moteur thermique. Par exemple, pour un turbomoteur, le paramètre de fonctionnement peut être une vitesse de rotation réduite du générateur de gaz, qui est corrigé en fonction des variations de la température et la pression atmosphérique extérieures au moteur thermique. Dans ce cas, le modèle peut comporter une seule courbe proposant une variation du niveau sonore du bruit généré par le turbomoteur en fonction de cette vitesse de rotation réduite de son générateur de gaz.

Par ailleurs, lorsque l'installation motrice hybride comporte plusieurs moteurs thermiques, le modèle du bruit généré peut être défini indépendamment pour chaque moteur thermique ou bien pour l'installation motrice hybride dans son ensemble en combinant le bruit de chacun de ces moteurs thermiques.

Le modèle du bruit généré par chaque moteur thermique, peut comporter plusieurs zones de croissance et de décroissance. En effet, le niveau sonore d'un moteur thermique ne suit pas obligatoirement une évolution constante vis-à-vis du paramètre de fonctionnement du moteur thermique mais peut posséder plusieurs extrema.

Le niveau sonore d'un moteur thermique augmente par exemple lorsque le paramètre de fonctionnement augmente jusqu'à un premier extremum A, puis le niveau sonore diminue jusqu'à un second extremum B alors que le paramètre de fonctionnement continue d'augmenter. Au-delà du second extremum B, le niveau sonore augmente de nouveau lorsque le paramètre de fonctionnement augmente jusqu'à atteindre valeurs et des niveaux de bruit maximaux.

De ce fait, il est important de caractériser le moteur thermique car dans la zone de décroissance située entre les extrema A et B, une diminution du paramètre de fonctionnement du moteur thermique entraîne une augmentation du bruit généré par ce moteur thermique, à l'opposé de l'effet désiré, à savoir réduire ce bruit généré.

En conséquence, la zone de décroissance située entre les deux extrema A et B, est une zone de préférence à éviter pour la détermination de la puissance principale à fournir par chaque moteur thermique afin de limiter le bruit généré par chaque moteur thermique et en particulier d'éviter une augmentation de ce bruit.

De fait, lors de la répartition de la puissance requise, si la puissance fournie par chaque moteur thermique entraîne un fonctionnement d'au moins un moteur thermique dans la zone de décroissance située entre les deux extrema A et B, la valeur du paramètre de fonctionnement de cet au moins un moteur thermique

est augmentée afin de sortir de la zone de décroissance et de passer en aval du second extremum B. La puissance fournie par cet au moins un moteur thermique se trouve alors augmentée également et la première puissance complémentaire fournie par au moins une machine électrique est au contraire réduite de sorte que l'installation motrice hybride fournisse la puissance requise.

De plus, si la puissance fournie par l'installation motrice hybride est supérieure à la puissance requise, au moins une machine électrique peut fonctionner en mode générateur, si cette machine électrique est réversible, afin de transformer le surplus de puissance fournie par l'installation motrice en énergie électrique. Cette énergie électrique est alors utilisée par le réseau électrique du giravion ou bien stockée dans au moins une source d'énergie électrique du giravion.

Par ailleurs, le procédé d'optimisation du bruit généré par un giravion en vol selon l'invention peut comporter des étapes optionnelles de contrôle réalisées en parallèle ou bien de façon séquentielle.

Un premier contrôle permet de surveiller chaque moteur thermique de l'installation motrice pour déterminer s'il est à un état démarré, à un état arrêté ou à un état permettant d'entraîner chaque rotor tout en respectant une consigne de vitesse de rotation prédéterminée de chaque rotor.

Un deuxième contrôle permet de surveiller chaque machine électrique de l'installation motrice pour déterminer si elle est à un état démarré ou à un état arrêté ainsi que son régime.

Un troisième contrôle permet de surveiller le réseau électrique du giravion pour contrôler si le réseau électrique est capable d'alimenter au moins une machine électrique. Si le réseau électrique est capable d'alimenter au moins une machine électrique, une autorisation d'alimentation d'au moins une machine électrique est alors délivrée. Cette autorisation d'alimentation peut notamment être une condition nécessaire à la réalisation de toute commande d'au moins une machine électrique.

Le procédé peut aussi comporter une étape de démarrage anticipé d'au moins une machine électrique consécutif à ce troisième contrôle du réseau électrique. Au cours de ce démarrage anticipé, au moins une machine électrique est démarrée dès que l'autorisation d'alimentation est délivrée, sans toutefois que cet au moins une machine électrique ne transmette de puissance mécanique à chaque rotor du giravion. De la sorte, ce démarrage anticipé permet avantageusement d'anticiper la réalisation de toute commande d'au moins une machine électrique, au moins une machine électrique pouvant fournir de façon quasi instantanée une puissance mécanique dès que cela est nécessaire.

Le procédé d'optimisation du bruit selon l'invention peut aussi comporter une étape de protection munie de sous-étapes. Une première sous-étape de détermination de la vitesse de rotation d'au moins un rotor, en particulier le rotor principal, est réalisée, puis, si la vitesse de rotation de cet au moins un rotor est supérieure à une vitesse prédéterminée de ce rotor, une seconde sous-étape d'arrêt de chaque machine électrique est réalisée. Cette étape complémentaire de protection permet ainsi d'éviter qu'au moins un rotor atteigne une survitesse lorsqu'il est entraîné par au moins une machine électrique.

En outre, le procédé selon l'invention peut comporter une étape d'inhibition inhibant la répartition de la puissance requise. En effet, la source de bruit prédominante du giravion en vol n'est pas toujours un moteur thermique, mais peut être un rotor ou bien la boîte de transmission mécanique de puissance en fonction de la phase de vol du giravion et des conditions de vol.

En conséquence, l'étape d'inhibition inhibe la répartition de la puissance requise lorsque la source de bruit prédominante du giravion n'est pas un moteur thermique, par exemple lors d'une phase de vol de croisière en palier ou bien d'une phase de vol d'approche.

De plus, la puissance fournie par l'installation motrice hybride pourrait être supérieure à la puissance requise pendant les phases de vol lorsque la source de bruit prédominante du giravion n'est pas un moteur thermique et au moins une machine électrique peut alors fonctionner en mode générateur, si cette machine électrique est réversible, afin de transformer le surplus de puissance fournie par l'installation motrice en énergie électrique. Cette énergie électrique est alors utilisée par le réseau électrique du giravion ou bien stockée dans au moins une source d'énergie électrique du giravion pour pouvoir être utilisée par la suite lors d'une phase de vol stationnaire par exemple.

Le procédé d'optimisation du bruit généré par une installation motrice hybride d'un giravion pendant une phase de vol selon l'invention permet ainsi avantageusement de réduire le bruit généré en vol par son ou ses moteurs thermiques, lorsque la phase de vol et les conditions de vol le permettent, afin d'améliorer le confort des passagers du giravion et limiter les désagréments pour l'environnement survolé par le giravion. Cette modération du bruit généré par le giravion est obtenue sans dégradation des performances du giravion, la réduction de la puissance fournie par chaque moteur thermique étant compensée par une autre source de puissance beaucoup moins bruyante, en particulier une machine électrique.

L'invention et ses avantages apparaîtront avec plus de détails dans le cadre de la description qui suit avec des exemples donnés à titre illustratif en référence aux figures annexées qui représentent :
- la figure 1, un giravion,
- les figures 2 et 3, deux schémas synoptiques d'un procédé d'optimisation du bruit généré par un giravion en vol, et
- la figure 4, un graphique représentant la variation du niveau sonore du bruit généré par un moteur thermique.

Les éléments présents dans plusieurs figures distinctes sont affectés d'une seule et même référence.

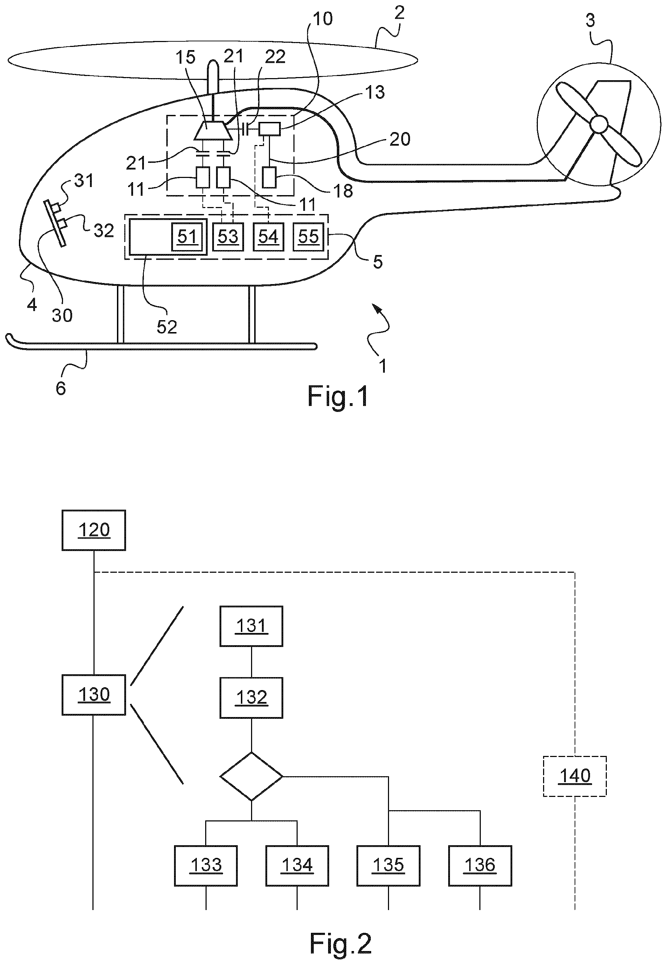

[Fig 1] Le giravion 1 représenté sur la figure 1 comporte un fuselage 4, un train d'atterrissage 6 à patins, une installation motrice hybride 10 et deux rotors 2,3 entraînés en rotation par l'installation motrice hybride 10. Les deux rotors 2,3 sont plus précisément un rotor principal 2 agencé au dessus du fuselage 4 et un rotor arrière anticouple 3 agencé sur une poutre de queue du giravion 1.

L'installation motrice hybride 10 comporte deux moteurs thermiques 11, une machine électrique 13 et une boîte de transmission mécanique de puissance 15. Les deux moteurs thermiques 11 et la machine électrique 13 sont reliés mécaniquement à la boîte de transmission mécanique de puissance 15. La boîte de transmission mécanique de puissance 15 est reliée mécaniquement aux deux rotors 2,3. De la sorte, les deux moteurs thermiques 11 et la machine électrique 13 peuvent entraîner en rotation conjointement ou bien indépendamment les uns des autres les deux rotors 2,3 par l'intermédiaire de la boîte de transmission mécanique de puissance 15.

L'installation motrice hybride 10 comporte également des dispositifs d'accouplement 21,22, tels qu'un embrayage ou une roue libre par exemple, reliant respectivement les moteurs thermiques 11 et la machine électrique 13 à la boîte de transmission mécanique de puissance 15.

Ces dispositifs d'accouplement 21,22 permettent notamment que chaque moteur thermique 11 et la machine électrique 13 soient capable de fournir une puissance mécanique à la boîte de transmission mécanique de puissance 15 alors que la boîte de transmission mécanique de puissance 15 ne peut pas fournir une puissance mécanique aux moteurs thermiques 11 et à la machine électrique 13.

Le giravion 1 comporte aussi une source d'énergie électrique 18 alimentant électriquement la machine électrique 13 via un réseau électrique 20 ainsi qu'un système de gestion 5 de l'installation motrice hybride 10. Le système de gestion 5 comporte par exemple un calculateur 52 muni notamment d'une mémoire 51, un boîtier de contrôle 53 des deux moteurs thermiques 11 et un dispositif de commande 54 de la machine électrique 13.

Le boîtier de contrôle 53 a pour fonction de contrôler et gérer le fonctionnement de chaque moteur thermique 11, et en particulier commander le démarrage, l'arrêt, les régimes et les différents paramètres de fonctionnement P de chaque moteur thermique 11 ainsi que de réguler son régime. Le dispositif de commande 54 a quant à lui pour fonction de contrôler et gérer le fonctionnement de la machine électrique 13, et en particulier de piloter l'alimentation électrique de la machine électrique 13 et la coupure de cette alimentation électrique ainsi que de réguler son régime.

Le giravion 1 comporte enfin un tableau de bord 30 muni de plusieurs boutons 31,32.

[Fig 2] La mémoire 51 stocke des instructions relatives à un procédé d'optimisation du bruit généré par une installation motrice hybride 10 d'un giravion en vol dont un premier schéma synoptique est représenté sur la figure 2. Le calculateur 52, formé par exemple par un processeur ou bien un circuit logique, permet l'exécution des étapes de ce procédé.

Ce procédé d'optimisation du bruit généré par une installation motrice hybride 10 d'un giravion en vol est exécuté suite à un ordre d'un pilote du giravion 1 demandant une modération du bruit généré par l'installation motrice hybride 10 du giravion 1, par exemple par l'intermédiaire d'un premier bouton 31 du tableau de bord 30. Ce procédé peut également être réalisé automatiquement par le système de gestion 5 du giravion 1.

Tout d'abord, une étape de détermination 120 d'une puissance requise à fournir par l'installation motrice hybride 10 pour la phase de vol est réalisée selon un modèle de puissance généré par exemple en fonction de la masse du giravion et des conditions de température et pression atmosphérique extérieures au giravion.

Ensuite, une répartition 130 de la puissance requise entre les deux moteurs thermiques 11 et la machine électrique 13 est réalisée en fonction d'un niveau de bruit objectif et de la puissance requise pour la phase de vol ainsi que d'un modèle du bruit généré par chaque moteur thermique 11 selon un paramètre de fonctionnement P de chaque moteur thermique 11.

Cette répartition 130 est réalisée par l'intermédiaire du boîtier de contrôle 53 pilotant les deux moteurs thermiques 11 et un dispositif de commande 54 pilotant la machine électrique 13. Cette répartition 130 permet ainsi de limiter le bruit généré par l'installation motrice hybride 10 pendant la phase de vol en réduisant la puissance principale fournie par les deux moteurs thermiques 11 et de compenser cette réduction de la puissance principale par la première puissance complémentaire fournie par la machine électrique 13 de façon silencieuse.

La répartition 130 comporte les sous-étapes suivantes :
- première détermination 131 d'une puissance principale à fournir par chaque moteur thermique 11 de sorte que chaque moteur thermique génère un niveau sonore inférieur ou égal au niveau de bruit objectif, la puissance principale étant déterminée en fonction du niveau de bruit objectif et du modèle du bruit généré par chaque moteur thermique 11, et
- seconde détermination 132 d'une première puissance complémentaire à fournir par la machine électrique 13 de sorte que l'installation motrice hybride 10 fournisse la puissance requise.

Lorsque la première puissance complémentaire est inférieure ou égale à une puissance disponible de la machine électrique 13, la répartition 130 comporte les sous-étapes suivantes :
- première commande 133 de la machine électrique 13 par l'intermédiaire du dispositif de commande 54 pour fournir la première puissance complémentaire, et
- seconde commande 134 de chaque moteur thermique 11 par l'intermédiaire du boîtier de contrôle 53 pour fournir la puissance principale.

Cette répartition 130 permet ainsi de limiter le bruit généré par l'installation motrice hybride 10 pendant la phase de vol au niveau de bruit objectif. La puissance requise pour l'installation motrice hybride est alors égale à la somme de la puissance principale fournie par chacun des deux moteurs thermiques et de la première puissance complémentaire fournie par la machine électrique 13. Cependant, lorsque la première puissance complémentaire est supérieure à la puissance disponible, la répartition 130 comporte les sous-étapes suivantes :
- troisième commande 135 de la machine électrique 13 par l'intermédiaire du dispositif de commande 54 pour fournir une première puissance complémentaire égale à la puissance disponible, et
- quatrième commande 136 des deux moteurs thermiques 11 par l'intermédiaire du boîtier de contrôle 53 pour fournir une puissance principale égale à une seconde puissance complémentaire de sorte que l'installation motrice hybride 10 fournisse la puissance requise.

Dans ce cas, la répartition 130 permet de limiter le bruit généré par l'installation motrice hybride 10 pendant la phase de vol courante sans toutefois atteindre le niveau de bruit objectif, mais en préservant la sécurité de la phase de vol courante en garantissant que la puissance requise est bien fournie par l'installation motrice hybride 10. La puissance requise est alors égale à la somme de la seconde puissance complémentaire fournie par chacun des deux moteurs thermiques 11 et de la première puissance complémentaire fournie par la machine électrique 13.

Dans les deux cas, le dispositif de commande 54 permet une régulation de la machine électrique 13 afin que la machine électrique 13 fournisse la première puissance complémentaire et, parallèlement le boîtier de contrôle 53 permet une régulation des deux moteurs thermiques 11 afin de réduire leurs puissances jusqu'à atteindre respectivement la puissance principale. De plus, le dispositif de commande 54 et le boîtier de contrôle 53 s'assurent que l'installation motrice hybride 10 fournisse en permanence la puissance requise égale à la somme des deux puissances principales des deux moteurs thermiques 11 et de la première puissance complémentaire de la machine électrique 13.

La puissance disponible de la machine électrique 13 est par exemple égale à une puissance maximale que peut fournir la machine électrique 13 sans dégradation de celle-ci.

La puissance disponible peut aussi être calculée en fonction d'une quantité d'énergie électrique disponible dans la source d'énergie électrique 18 et d'une durée d'utilisation de cette quantité d'énergie électrique jusqu'à épuisement de la source d'énergie électrique 18. Cette puissance disponible est ainsi égale à la puissance que la machine électrique 13 peut fournir de façon continue pendant la durée prédéterminée jusqu'à épuisement de la quantité d'énergie électrique disponible dans la source d'énergie électrique 18.

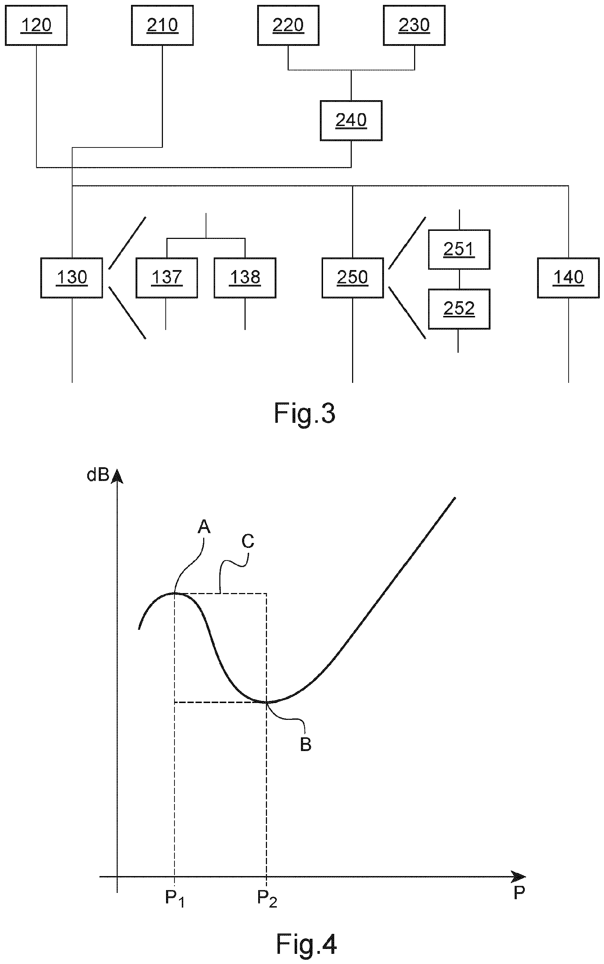

[Fig 4] Le modèle du bruit généré par chaque moteur thermique 11 est défini par exemple par une courbe représentant la variation du niveau sonore du bruit généré par un moteur thermique 11 et visible sur le graphique de la figure 4. Cette courbe caractérise le bruit généré par un moteur thermique 11, exprimé en Décibels (dB), en fonction d'un paramètre de fonctionnement P du moteur thermique. Un paramètre de fonctionnement P du moteur thermique 11 est par exemple la vitesse de rotation ou une température de fonctionnement du moteur thermique 11, un couple fourni par le moteur thermique 11 ou encore la puissance fournie par ce moteur thermique 11.

Ce modèle peut également être défini par un jeu de courbes, chaque courbe correspondant par exemple à des conditions de vol, en particulier la température et la pression atmosphérique extérieures au moteur thermique, différentes ainsi qu'à une masse donnée du giravion 1. Cette courbe ou ce jeu de courbes est généré(e) lors d'essais sur bancs des moteurs thermiques ou bien lors d'essais en vol du giravion 1 préalablement à sa mise en service. Une mise à jour peut également être faite durant la vie du giravion 1, selon les évolutions et/ou le vieillissement de chaque moteur thermique 11.

La courbe représentée sur le graphique de la figure 4 comporte deux extrema A et B, un premier extremum A, formant un maximum, correspondant à un premier paramètre de fonctionnement P1 et un second extremum B, formant un minimum, correspondant à un second paramètre de fonctionnement P2. La courbe est décroissante entre les deux extrema A et B et constitue une zone de décroissance C correspond à des valeurs du paramètre de fonctionnement P comprises dans l'intervalle [P1,P2].

En conséquence, lors de la répartition 130 de la puissance requise, si la puissance fournie par chaque moteur thermique 11 entraîne un fonctionnement d'au moins un moteur thermique 11 dans la zone de décroissance C, à savoir entre le premier et le second extrema A et B, le boîtier de contrôle 53 commande cet au moins un moteur thermique 11 de sorte que la valeur du paramètre de fonctionnement P soit augmentée afin de dépasser la valeur P2 et de fait le second extremum B afin de sortir de la zone de décroissance C. L'augmentation de ce paramètre de fonctionnement P provoque une augmentation de la puissance fournie par cet au moins un moteur thermique 11. En conséquence, le dispositif de commande 54 commande la machine électrique 13 de sorte que la première puissance complémentaire soit réduite afin que l'installation motrice hybride 10 fournisse la puissance requise.

Toutefois, la puissance fournie par l'installation motrice hybride 10 peut devenir supérieure à la puissance requise pour la phase de vol du giravion 1, la puissance fournie par un moteur thermique 11 devant être augmentée alors que la machine électrique 13 ne fournit aucune première puissance complémentaire. En conséquence et si la machine électrique 13 est réversible, la machine électrique 13 peut fonctionner en mode générateur afin d'optimiser le surplus de puissance fourni par les deux moteurs thermiques et de le transformer en énergie électrique. Dès lors, l'installation motrice hybride 10 fournit uniquement la puissance requise aux rotors 2,3 du giravion 1.

[Fig 3] Un second schéma synoptique d'un procédé d'optimisation du bruit généré par une installation motrice hybride 10 d'un giravion est représenté sur la figure 3. Ce procédé comporte comme précédemment une étape de détermination 120 d'une puissance requise à fournir par l'installation motrice hybride 10 pour la phase de vol et une étape de répartition 130 de la puissance requise entre les deux moteurs thermiques 11 et la machine électrique 13.Des étapes optionnelles de contrôle 210-230 peuvent être réalisées de préférence en parallèle et parallèlement à l'étape de détermination 120, bien qu'elles puissent être réalisées de façon séquentielle.

Un premier contrôle 210 permet de surveiller les moteurs thermiques 11 et de déterminer si ces moteurs thermiques 11 sont à un état démarré, à un état arrêté ou à un état permettant d'entraîner le rotor principal 2 en respectant une consigne de vitesse de rotation prédéterminée. Ce premier contrôle 210 est réalisé par l'intermédiaire du boîtier de contrôle 53. Le boîtier de contrôle 53 fournit alors un premier signal électrique au calculateur 52 du système de gestion 5 contenant l'information de l'état de chaque moteur thermique 11 et éventuellement de son régime et de l'état de ses paramètres P.

Un deuxième contrôle 220 permet de surveiller la machine électrique 13 et de déterminer si la machine électrique 13 est à un état démarré ou à un état arrêté ainsi que son régime. Ce deuxième contrôle 220 est réalisé par l'intermédiaire du dispositif de commande 54. Le dispositif de commande 54 fournit alors un deuxième signal électrique au calculateur 52 contenant l'information de l'état de la machine électrique 13 et éventuellement de son régime.

Un troisième contrôle 230 permet de surveiller le réseau électrique 20 et de contrôler que le réseau électrique 20 est capable d'alimenter la machine électrique 13, en surveillant notamment la puissance électrique et l'énergie électrique que peut délivrer le réseau électrique 20 ainsi que la capacité électrique de la source d'énergie électrique 18. Ce troisième contrôle 230 est réalisé par exemple l'intermédiaire par exemple d'un dispositif de contrôle 55 dédié.

Un démarrage anticipé 240 de la machine électrique 13, qui est également une étape optionnelle, peut alors être effectué dès qu'une autorisation d'alimentation est délivrée suite au troisième contrôle 230 et si le deuxième contrôle 220 détermine que la machine électrique 13 est à un état arrêté. La machine électrique 13 est par exemple démarrée, sans transmettre de puissance mécanique à chaque rotor 2,3, en anticipation de la réalisation d'une première commande 133 de la machine électrique 13.

Ensuite, si les deux moteurs thermiques 11 sont en état permettant d'entraîner le rotor principal 2 en respectant une consigne de vitesse de rotation prédéterminée, la répartition 130 de la puissance requise entre les deux moteurs thermiques 11 et la machine électrique 13 est réalisée.

Une cinquième commande 137 de la machine électrique 13 par l'intermédiaire du dispositif de commande 54 et une sixième commande 138 des deux moteurs thermiques 11 par l'intermédiaire du boîtier de contrôle 53 sont réalisées en parallèle.

Au cours de la cinquième commande 137, la puissance fournie par la machine électrique 13 est augmentée progressivement. Parallèlement, au cours de la sixième commande 138, le boîtier de contrôle 53 pilote les deux moteurs thermiques 11 en diminuant les paramètres de fonctionnement P afin de diminuer la puissance fournie par chaque moteur thermique 11 tout en respectant la consigne de vitesse de rotation prédéterminée pour chaque rotor, en particulier pour le rotor principal 2.

Tant que le paramètre de fonctionnement P de chaque moteur thermique 11 est supérieur à la valeur correspondant au niveau de bruit objectif, la puissance de la machine électrique 13 continue à augmenter. Par conséquence, le paramètre de fonctionnement P va diminuer ainsi que le bruit généré par les moteurs thermiques 11.

Dès que le paramètre de fonctionnement P de chaque moteur thermique 11 est égal au paramètre correspondant au niveau de bruit objectif, la puissance de la machine électrique 13 arrête d'augmenter.

Lorsque la puissance de la machine électrique 13 atteint la valeur de la puissance disponible, la puissance de la machine électrique 13 arrête également d'augmenter pour se stabiliser à cette puissance disponible bien que le paramètre de fonctionnement P de chaque moteur thermique 11 ne soit pas égal au paramètre correspondant au niveau de bruit objectif.

Si le paramètre de fonctionnement P de chaque moteur thermique 11 est supérieur au paramètre correspondant au niveau de bruit objectif alors que la puissance de la machine électrique 13 arrête d'augmenter, le bruit généré par l'installation motrice hybride 10 pendant la phase de vol courante est limité sans toutefois atteindre le niveau de bruit objectif, mais en préservant la sécurité de la phase de vol courante en garantissant que la puissance requise est bien fournie par l'installation motrice hybride 10.

En outre, si le paramètre de fonctionnement P de chaque moteur thermique 11 est inférieur au paramètre correspondant au niveau de bruit objectif, le point de fonctionnement P étant situé entre les deux extrema A et B de la courbe de la figure 3, la puissance de la machine électrique 13 diminue afin de faire augmenter le paramètre de fonctionnement P et faire passer le point de fonctionnement en aval du second extremum B. Si la machine électrique 13 ne fournit aucune puissance, alors cette machine électrique 13 peut fonctionner en mode générateur, si cette machine électrique 13 est réversible, afin de transformer le surplus de puissance fournie par l'installation motrice 10 en énergie électrique. Cette énergie électrique est alors utilisée par le réseau électrique 20 du giravion 1 ou bien stockée dans au moins une source d'énergie électrique 18 du giravion 1.

Le procédé d'optimisation du bruit peut aussi comporter une étape optionnelle de protection 250 munie de deux sous-étapes, à savoir une première sous-étape de détermination 251 d'une vitesse de rotation du rotor principal 2 et une seconde sous-étape de diminution 252 de la puissance de la machine électrique 13. La première sous-étape de détermination 251 permet de déterminer une vitesse de rotation du rotor principal 2 par l'intermédiaire d'un dispositif de détermination 12. Ensuite, si la vitesse de rotation du rotor principal 2 est supérieure à une vitesse prédéterminée, la seconde sous-étape de diminution 252 de la puissance est réalisée afin de réduire la puissance fournie par la machine électrique 13 et d'éviter de la sorte que le rotor principal 2 atteigne une survitesse. Cette seconde sous-étape de diminution 252 de la puissance de la machine électrique 13 peut aller jusqu'à l'arrêt de la machine électrique 13.

En outre, le procédé d'optimisation du bruit selon l'invention peut aussi appliquer de façon optionnelle et parallèlement à la première commande 133 de la machine électrique 13, le troisième contrôle 230 du réseau électrique 20 puis la diminution 252 de la puissance de la machine électrique 13 afin surveiller le réseau électrique 20 pendant cette première commande 133. Ainsi, si le troisième contrôle 230 détecte que le réseau électrique 20 n'est plus en capacité d'alimenter électriquement la machine électrique 13 afin de délivrer la première puissance complémentaire, une alerte peut être transmise et la diminution 252 de la puissance de la machine électrique 13 est réalisée, éventuellement jusqu'à son arrêt en fonction de l'état du réseau électrique 20.

Par ailleurs, le procédé d'optimisation du bruit généré par un giravion 1 peut également comporter une étape optionnelle d'inhibition 140 de la répartition 130 de la puissance requise. En effet, selon la phase de vol du giravion 1, la source de bruit prédominante du giravion 1 peut être au moins un des deux rotors 2,3, au moins un des deux moteurs thermiques 11 ou bien la boîte de transmission mécanique de puissance 15. En conséquence, l'étape d'inhibition 140 inhibe la répartition 130 de la puissance requise lorsque la source de bruit prédominante du giravion 1 n'est pas un moteur thermique 11, par exemple lors des phases de vol de croisière en palier et d'approche.

En outre, le niveau de bruit objectif que ne doit pas dépasser de préférence le giravion 1 lors de la phase de vol est fonction de l'environnement survolé par le giravion 1 et/ou d'une hauteur de vol du giravion 1 par rapport au sol survolé pendant cette phase de vol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

Notamment, un giravion 1 comportant plusieurs rotors principaux 2 de sustentation, par exemple un giravion 1 comportant quatre rotors principaux 2 de sustentation, peut appliquer le procédé d'optimisation du bruit généré par une installation motrice hybride d'un giravion 1 en vol tel que décrit.

## Revendications

1. Procédé d'optimisation du bruit généré par une installation motrice hybride (10) d'un giravion (1) pendant une phase de vol, ladite installation motrice hybride (10) étant munie d'au moins un moteur thermique (11) et d'au moins une machine électrique (13), ledit procédé comportant les étapes suivantes :
• détermination (120) d'une puissance requise à fournir par ladite installation motrice hybride (10) pour ladite phase de vol, et
répartition (130) de ladite puissance requise entre ledit au moins un moteur thermique (11) et au moins une machine électrique (13) en fonction d'un niveau de bruit objectif et de ladite puissance requise pour ladite phase de vol ainsi que d'un modèle du bruit généré par ledit au moins un moteur thermique (11) selon un paramètre dudit au moins un moteur thermique (11), ladite répartition (130) comportant les sous-étapes suivantes :
- première détermination (131) d'une puissance principale à fournir par ledit au moins un moteur thermique (11) de sorte que ledit au moins un moteur thermique (11) génère un niveau sonore inférieur ou égal audit niveau de bruit objectif, ladite puissance principale étant déterminée en fonction dudit niveau de bruit objectif et dudit modèle dudit bruit généré par ledit au moins un moteur thermique (11),
- seconde détermination (132) d'une première puissance complémentaire à fournir par au moins une machine électrique (13), de sorte que ladite installation motrice hybride (10) fournisse ladite puissance requise,
et lorsque ladite première puissance complémentaire est inférieure ou égale à une puissance disponible de ladite au moins une machine électrique (13) :
• première commande (133) d'au moins une machine électrique (13) pour fournir ladite première puissance complémentaire, et
• seconde commande (134) dudit au moins un moteur thermique (11) pour fournir ladite puissance principale,
et lorsque ladite première puissance complémentaire est supérieure à ladite puissance disponible, ladite répartition (130) comporte les sous-étapes suivantes :
• troisième commande (135) d'au moins une machine électrique (13) pour fournir une première puissance complémentaire égale à ladite puissance disponible, et
• quatrième commande (136) dudit au moins un moteur thermique (11) pour fournir une puissance principale égale à une seconde puissance complémentaire de sorte que ladite installation motrice hybride (10) fournisse ladite puissance requise.
dans lequel, ledit modèle du bruit comporte une zone de décroissance (C) et si, lors de ladite répartition (130), ladite puissance principale entraîne un fonctionnement d'au moins un moteur thermique (11) dans ladite zone de décroissance (C), ladite puissance principale est augmentée afin de sortir de ladite zone de décroissance (C) et ladite première puissance complémentaire est réduite de sorte que ladite installation motrice hybride (10) fournisse ladite puissance requise.

2. Procédé selon la revendication 1, ladite première puissance complémentaire fournie par ladite au moins une machine électrique (13) augmente tant qu'un paramètre de fonctionnement P dudit au moins un moteur thermique (11) est supérieur à une valeur correspondant audit niveau de bruit objectif, ledit paramètre de fonctionnement P diminuant en parallèle, et lorsque ladite première puissance complémentaire est égale à une puissance disponible, ladite première puissance complémentaire arrête d'augmenter.

3. Procédé selon l'une quelconque des revendications 1 à 2,
dans lequel ladite puissance disponible est égale à une puissance maximale que peut fournir ladite au moins une machine électrique (13) sans dégradation de ladite au moins une machine électrique (13).

4. Procédé selon l'une quelconque des revendications 1 à 2,
dans lequel ladite puissance disponible est calculée en fonction d'une quantité d'énergie électrique disponible dans au moins une source d'énergie électrique (18) alimentant ladite au moins une machine électrique (13) et d'une durée d'utilisation de ladite quantité d'énergie électrique jusqu'à épuisement de ladite quantité d'énergie électrique disponible dans ladite au moins une source d'énergie électrique (18).

5. Procédé selon l'une quelconque des revendications 1 à 4,
dans lequel, si ladite puissance fournie par ladite installation motrice (10) est supérieure à ladite puissance requise, au moins une machine électrique (15) fonctionne en mode générateur afin de transformer le surplus de puissance fournie par ledit au moins un moteur thermique (11) en énergie électrique.

6. Procédé selon l'une quelconque des revendications 1 à 5,
dans lequel ledit procédé comporte les étapes suivantes :
• premier contrôle (210) dudit au moins un moteur thermique (11) pour déterminer si ledit au moins un moteur thermique 11 est à un état démarré, à un état arrêté ou à un état permettant d'entraîner un rotor (2,3) dudit giravion (1),
• deuxième contrôle (220) de ladite au moins une machine électrique (13) pour déterminer si ladite au moins une machine électrique (13) est à un état démarré ou à un état arrêté,
• troisième contrôle (230) d'un réseau électrique (20) dudit giravion (1) alimentant ladite au moins une machine électrique (13) pour contrôler que ledit réseau électrique (20) est capable d'alimenter ladite au moins une machine électrique (13), et
• démarrage anticipé (240) d'au moins une machine électrique (13) dès qu'une autorisation d'alimentation est délivrée suite audit troisième contrôle 230 et si ledit deuxième contrôle (220) détermine que ladite au moins une machine électrique (13) est à un état arrêté.

7. Procédé selon l'une quelconque des revendications 1 à 6,
dans lequel ledit niveau de bruit objectif est fonction de l'environnement survolé par ledit giravion (1) notamment un environnement urbain ou périurbain et/ou d'une hauteur de vol dudit giravion (1) par rapport au sol de l'environnement survolé.

8. Procédé selon l'une quelconque des revendications 1 à 7,
dans lequel ledit procédé comporte une étape d'inhibition (140) inhibant ladite répartition (130) de ladite puissance requise lorsque dans ladite phase de vol, ledit au moins un moteur thermique n'est pas une source de bruit prédominante.

9. Procédé selon la revendication 8,
dans lequel ladite phase de vol dans laquelle ledit au moins un moteur thermique n'est pas ladite source de bruit prédominante est une phase de vol de croisière en palier ou une phase de vol d'approche.

10. Procédé selon l'une quelconque des revendications 1 à 9,
dans lequel ledit procédé comporte une étape de protection (250) munie de deux sous-étapes :
• détermination (251) d'au moins une vitesse de rotation d'un rotor (2,3) dudit giravion (1),
• diminution (252) de ladite puissance fournie par ladite au moins une machine électrique (13) si au moins une vitesse de rotation est supérieure à une vitesse prédéterminée.

11. Procédé selon l'une quelconque des revendications 1 à 10,
dans lequel ledit paramètre dudit moteur thermique (11) est une vitesse de rotation dudit moteur thermique (1), une température de fonctionnement dudit moteur thermique (11) ou bien un couple fourni par ledit moteur thermique (1).

12. Procédé selon l'une quelconque des revendications 1 à 11,
dans lequel, lorsque ledit moteur thermique (11) est un turbomoteur comportant un générateur de gaz et une turbine libre, ledit paramètre dudit moteur thermique (11) est une vitesse de rotation dudit générateur de gaz, une température des gaz en sortie d'une chambre de combustion dudit générateur de gaz ou bien un couple fourni par ladite turbine libre ou bien ledit générateur de gaz.

## Patentansprüche

1. Verfahren zur Optimierung des von einer Hybridantriebsanlage (10) eines Drehflügelflugzeugs (1) während einer Flugphase erzeugten Schalls, wobei die Hybridantriebsanlage (10) mit mindestens einem Verbrennungsmotor (11) und mindestens einer elektrischen Maschine (13) ausgestattet ist,
wobei das Verfahren die folgenden Schritte umfasst:
• Bestimmen (120) einer erforderlichen Leistung, die von der Hybridantriebsanlage (10) für die Flugphase bereitgestellt werden muss, und
Aufteilen (130) der erforderlichen Leistung zwischen dem mindestens einen Verbrennungsmotor (11) und mindestens einer elektrischen Maschine (13) in Abhängigkeit von einem Zielschallpegel und der erforderlichen Leistung für die Flugphase sowie einem Modell des von dem mindestens einen Verbrennungsmotor (11) erzeugten Schalls in Abhängigkeit von einem Parameter des mindestens einen Verbrennungsmotors (11), wobei das Aufteilen (130) die folgenden Teilschritte umfasst:
- erstes Bestimmen (131) einer von dem mindestens einen Verbrennungsmotor (11) zu liefernden Hauptleistung derart, dass der mindestens eine Verbrennungsmotor (11) einen Schallpegel erzeugt, der kleiner oder gleich dem Zielschallpegel ist, wobei die Hauptleistung in Abhängigkeit von dem Zielschallpegel und dem Modell des von dem mindestens einen Verbrennungsmotor (11) erzeugten Schalls bestimmt wird,
- zweites Bestimmen (132) einer ersten Ergänzungsleistung, die von mindestens einer elektrischen Maschine (13) bereitgestellt werden muss, damit die Hybridantriebsanlage (10) die erforderliche Leistung bereitstellt,
und wenn die erste Ergänzungsleistung kleiner oder gleich einer verfügbaren Leistung der mindestens einen elektrischen Maschine (13) ist:
• erstes Steuern (133) der mindestens einen elektrischen Maschine (13), um die erste Ergänzungsleistung zu liefern, und
• zweites Steuern (134) des mindestens einen Verbrennungsmotors (11), um die Hauptleistung bereitzustellen,
und wenn die erste Ergänzungsleistung größer als die verfügbare Leistung ist, umfasst die Aufteilung (130) die folgenden Teilschritte:
• drittes Steuern (135) mindestens einer elektrischen Maschine (13), um eine erste Ergänzungsleistung zu liefern, die gleich der verfügbaren Leistung ist, und
• viertes Steuern (136) des mindestens einen Verbrennungsmotors (11), um eine Hauptleistung zu liefern, die gleich einer zweiten Ergänzungsleistung ist, so dass die Hybridantriebsanlage (10) die erforderliche Leistung liefert,
wobei das Schallmodell einen Abnahmebereich (C) aufweist und, wenn beim Verteilen (130) die Hauptleistung dazu führt, dass mindestens ein Verbrennungsmotor (11) in dem Abnahmebereich (C) betrieben wird, die Hauptleistung erhöht wird, um den Abnahmebereich (C) zu verlassen, und die erste Zusatzleistung derart verringert wird, dass die Hybridantriebsanlage (10) die erforderliche Leistung bereitstellt.

2. Verfahren nach Anspruch 1, bei dem
die von der mindestens einen elektrischen Maschine (13) gelieferte erste Ergänzungsleistung steigt, solange ein Betriebsparameter P des mindestens einen Verbrennungsmotors (11) über einem Wert liegt, der dem Zielschallpegel entspricht, wobei der Betriebsparameter P parallel dazu abnimmt, und bei dem die erste Ergänzungsleistung aufhört zu steigen, wenn die erste Ergänzungsleistung gleich einer verfügbaren Leistung ist.

3. Verfahren nach einem der Ansprüche 1 bis 2, bei dem
die verfügbare Leistung gleich einer maximalen Leistung ist, die die mindestens eine elektrische Maschine (13) liefern kann, ohne dass die mindestens eine elektrische Maschine (13) beschädigt wird.

4. Verfahren nach einem der Ansprüche 1 bis 2, bei dem
die verfügbare Leistung in Abhängigkeit von einer Menge an elektrischer Energie, die in mindestens einer die mindestens eine elektrische Maschine (13) versorgenden elektrischen Energiequelle (18) verfügbar ist, und einer Nutzungsdauer der Menge an elektrischer Energie bis zur Erschöpfung der Menge an in der mindestens einen elektrischen Energiequelle (18) verfügbarer elektrischer Energie berechnet wird.

5. Verfahren nach einem der Ansprüche 1 bis 4, bei dem, wenn die von der Antriebsanlage (10) gelieferte Leistung größer ist als die benötigte Leistung, mindestens eine elektrische Maschine (15) im Generatorbetrieb arbeitet, um die von dem mindestens einen Verbrennungsmotor (11) gelieferte überschüssige Leistung in elektrische Energie umzuwandeln.

6. Verfahren nach einem der Ansprüche 1 bis 5, wobei das Verfahren die folgenden Schritte umfasst:
• erstes Kontrollieren (210) des mindestens einen Verbrennungsmotors (11), um zu bestimmen, ob sich der mindestens eine Verbrennungsmotor (11) in einem gestarteten Zustand, einem angehaltenen Zustand oder einem Zustand befindet, der es erlaubt, einen Rotor (2, 3) des Drehflüglers (1) anzutreiben,
• zweites Kontrollieren (220) der mindestens einen elektrischen Maschine (13), um festzustellen, ob sich die mindestens eine elektrische Maschine (13) in einem gestarteten Zustand oder in einem angehaltenen Zustand befindet,
• drittes Kontrollieren (230) eines Stromnetzes (20) des Drehflügelflugzeugs (1), das die mindestens eine elektrische Maschine (13) versorgt, um zu überwachen, dass das Stromnetz (20) in der Lage ist, die mindestens eine elektrische Maschine (13) zu versorgen, und
• vorzeitiges Starten (240) der mindestens einen elektrischen Maschine (13), sobald als Ergebnis des dritten Kontrollierens 230 eine Stromversorgungserlaubnis erteilt wird und wenn das zweite Kontrollieren (220) feststellt, dass sich die mindestens eine elektrische Maschine (13) in einem angehaltenen Zustand befindet.

7. Verfahren nach einem der Ansprüche 1 bis 6, bei dem
der Zielschallpegel von der von dem Drehflügelflugzeug (1) überflogenen Umgebung, insbesondere einer städtischen oder vorstädtischen Umgebung, und/oder von einer Flughöhe des Drehflügelflugzeugs (1) in Bezug auf den Boden der überflogenen Umgebung abhängig ist.

8. Verfahren nach einem der Ansprüche 1 bis 7, bei dem
das Verfahren einen Sperrschritt (140) umfasst, der das Aufteilen (130) der erforderlichen Leistung sperrt, wenn in der Flugphase der mindestens eine Verbrennungsmotor keine vorherrschende Schallquelle ist.

9. Verfahren nach Anspruch 8, bei dem
die Flugphase, in der der mindestens eine Verbrennungsmotor nicht die vorherrschende Schallquelle ist, eine Reiseflugphase im Horizontalflug oder eine Anflugphase ist.

10. Verfahren nach einem der Ansprüche 1 bis 9, wobei
das Verfahren einen Schutzschritt (250) umfasst, der zwei Unterschritte umfasst:
• Bestimmen (251) mindestens einer Drehgeschwindigkeit eines Rotors (2, 3) des Drehflügelflugzeugs (1),
• Verringern (252) der von der mindestens einen elektrischen Maschine (13) gelieferten Leistung, wenn mindestens eine Drehgeschwindigkeit höher als eine vorbestimmte Geschwindigkeit ist.

11. Verfahren nach einem der Ansprüche 1 bis 10, bei dem
der Parameter des Verbrennungsmotors (11) eine Drehzahl des Verbrennungsmotors (1), eine Betriebstemperatur des Verbrennungsmotors (11) oder ein von dem Verbrennungsmotor (1) geliefertes Drehmoment ist.

12. Verfahren nach einem der Ansprüche 1 bis 11, bei dem,
wenn der Verbrennungsmotor (11) ein Turbomotor mit einem Gasgenerator und einer freien Turbine ist, der Parameter des Verbrennungsmotors (11) eine Drehzahl des Gasgenerators, eine Temperatur der Gase am Ausgang einer Brennkammer des Gasgenerators oder ein Drehmoment ist, das von der freien Turbine oder dem Gasgenerator geliefert wird.

## Claims

1. Method for optimizing the noise generated by a hybrid drive system (10) for a rotorcraft (1) during a flight phase, said hybrid drive system (10) being equipped with at least one combustion engine (11) and at least one electric machine (13),
said method including the following steps:
• determining (120) a required power to be supplied by said hybrid drive system (10) for said flight phase, and
distributing (130) said required power between said at least one combustion engine (11) and at least one electric machine (13) as a function of an objective noise level and said power required for said flight phase and of a model of the noise generated by said at least one combustion engine (11) according to a parameter of said at least one combustion engine (11), said distributing (130) including the following sub-steps:
- first determination (131) of a main power to be provided by said at least one combustion engine (11) such that said at least one combustion engine (11) generates a sound level less than or equal to said objective noise level, said main power being determined as a function of said objective noise level and said model of said noise generated by said at least one combustion engine (11),
- second determination (132) of a first complementary power to be supplied by at least one electric machine (13), such that said hybrid drive system (10) supplies said required power,
and when said first complementary power is less than or equal to an available power of said at least one electric machine (13):
• first control (133) of at least one electric machine (13) to supply said first complementary power, and
• second control (134) of said at least one combustion engine (11) to supply said main power,
and when said first complementary power is greater than said available power, said distributing (130) includes the following sub-steps:
• third control (135) of at least one electric machine (13) to supply a first complementary power equal to said available power, and
• fourth control (136) of said at least one combustion engine (11) to supply a main power equal to a second complementary power such that said hybrid drive system (10) supplies said required power
wherein said model of the noise includes a zone of decline (C) and if, during said distributing (130), said main power causes at least one combustion engine (11) to operate in said zone of decline (C), said main power is increased in order to leave said zone of decline (C) and said first complementary power is reduced such that said hybrid drive system (10) supplies said required power.

2. Method according to Claim 1,
wherein said first complementary power supplied by said at least one electric machine (13) increases as long as an operating parameter P of said at least one combustion engine (11) is greater than a value corresponding to said objective noise level, said operating parameter P decreasing in parallel, and when said first complementary power is equal to an available power, said first complementary power stops increasing.

3. Method according to either one of Claims 1 or 2,
wherein said available power is equal to a maximum power that said at least one electric machine (13) can supply without deterioration of said at least one electric machine (13).

4. Method according to either one of Claims 1 or 2,
wherein said available power is calculated as a function of a quantity of electrical energy available in at least one electrical energy source (18) supplying said at least one electric machine (13) and of a period of use of said quantity of electrical energy until said quantity of electrical energy available in said at least one electrical energy source (18) has been depleted.

5. Method according to one of Claims 1 to 4,
wherein if said power supplied by said drive system (10) is greater than said required power, at least one electric machine (15) operates in generator mode in order to transform the surplus of power supplied by said at least one combustion engine (11) into electrical energy.

6. Method according to one of Claims 1 to 5,
wherein said method includes the following steps:
• first check (210) of said at least one combustion engine (11) to determine if said at least one combustion engine (11) is in a started state, a stopped state or a state enabling a rotor (2, 3) of said rotorcraft (1) to be driven,
• second check (220) of said at least one electric machine (13) to determine if said at least one electric machine (13) is in a started state or a stopped state,
• third check (230) of an electricity network (20) of said rotorcraft (1) suppling said at least one electric machine (13) to check that said electricity network (20) is able to supply said at least one electric machine (13), and
• anticipated start-up (240) of at least one electric machine (13) as soon as a power supply authorization is provided following said third check (230) and if said second check (220) determines that said at least one electric machine (13) is in a stopped state.

7. Method according to one of Claims 1 to 6,
wherein said objective noise level is a function of the environment flown over by said rotorcraft (1), in particular an urban or suburban environment, and/or of a flying height of said rotorcraft (1) relative to the ground of the environment flown over.

8. Method according to one of Claims 1 to 7,
wherein said method includes an inhibition step (140) inhibiting said distributing (130) of said required power when, in said flight phase, said at least one combustion engine is not a predominant source of noise.

9. Method according to Claim 8,
wherein said flight phase in which said at least one combustion engine is not said predominant source of noise is a level cruise flight phase or an approach flight phase.

10. Method according to one of Claims 1 to 9,
wherein said method includes a protection step (250) provided with two sub-steps:
• determining (251) at least one rotational speed of a rotor (2, 3) of said rotorcraft (1),
• reducing (252) said power supplied by said at least one electric machine (13) if at least one rotational speed is greater than a predetermined speed.

11. Method according to one of Claims 1 to 10,
wherein said parameter of said combustion engine (11) is a rotational speed of said combustion engine (1), an operating temperature of said combustion engine (11) or a torque provided by said combustion engine (1).

12. Method according to one of Claims 1 to 11,
wherein, when said combustion engine (11) is a turboshaft engine having a gas generator and a free turbine, said parameter of said combustion engine (11) is a rotational speed of said gas generator, a temperature of the gases leaving a combustion chamber of said gas generator or a torque provided by said free turbine or said gas generator.
